# EUROPEAN PATENT SPECIFICATION

(11) **EP 0 646 764 B1**
(45) Date of publication and mention of the grant of the patent: **18.11.1998**
(21) Application number: 94306961.7
(22) Date of filing: 23.09.1994
(51) Int. Cl.: G01B 3/18

(54) **Digital display micrometer gauge**
Mikrometer mit Digitalindikation
Micromètre à indication digitale

(30) Priority: 01.10.1993 JP 246850/93
(43) Date of publication of application: 05.04.1995
(73) Proprietor: Mitutoyo Corporation, Kanagawa 213-0012 (JP)
(72) Inventor: Tachikake, Masahiko, c/o Mitutoyo Corporation, Kawasaki-shi, Kanahawa-ken 213 (JP); Suzuki, Masamichi, c/o Mitutoyo Corporation, Kawasaki-shi, Kanahawa-ken 213 (JP)
(74) Representative: Jackson, Peter Arthur

(56) References cited:
- US-A- 4 561 185

## Description

This invention relates to a digital display micrometer gauge for measuring dimensions of a workpiece to be measured such as length, thickness and the like, through a displacement of a spindle.

The micrometer gauge has conventionally been known as a gauge for measuring dimensions of a workpiece to be measured through displacement of a spindle. Since it is easy to handle, this type of gauge is used by many machinists. As described in US-A-4,550,507 and US-A-4,578,868, the micrometer gauge generally comprises a U-shaped main frame, to which an inner sleeve is secured. A female screw thread is formed in the inner sleeve by precision machining, and a male screw thread of a spindle, which is likewise formed by precision machining, is engaged with this female thread. The spindle is rotated through a thimble connected with it, and, by reading the amount of this rotation, the workpiece is measured.

In this conventional micrometer gauge, in which the rotation of the thimble is transmitted to the spindle through the male and female screw threads, the screw pitch is generally as small as approximately 0.5 mm, so that the spindle cannot be displaced at high speed, resulting in a rather poor operational efficiency. This is particularly true of a case where measurement is to be conducted repeatedly. A high speed displacement of the spindle might be ensured by coarsening the screw pitch. However, that would result in deterioration in the measuring accuracy of the micrometer.

Micrometer gauges designed with a view to solving the above problem are proposed in US-A-4,485,556 and Japanese Utility Model Publication No. 3-4883. In these gauges, the spindle is supported by the main frame at two positions of its middle section through the intermediary of stationary bearings. The spindle is displaced by a spindle displacement mechanism, which comprises a sleeve engaged with the main frame in such a way as to be rotatable but not movable along the axial direction of the spindle; a helical groove formed on the inner side of this sleeve and having a relatively large pitch; a spindle engagement section engaged with this groove; and a spindle rotation preventing means for controlling the rotation of the spindle relative to the main frame. Due to this mechanism, high speed displacement of the spindle is ensured.

To ensure high measurement accuracy in digital display, the conventional gauge disclosed in Japanese Utility Model Publication No. 3-4883 includes, in addition to the above described driving mechanism, an encoder having a main scale arranged in the middle section of the spindle through the intermediary of an arm member in such a way as to extend parallel to the axial dimension of the spindle and an index scale, which is provided on the main frame. The displacement amount of the spindle is detected in digital form by means of this encoder. In this type of conventional gauge, in which the spindle is directly supported by two bearings secured to the main frame, it is difficult for the main scale to be directly attached to the spindle. That is, when the main scale is to be directly secured to the spindle, it is necessary for the spindle to be considerably long, otherwise the main scale would hit against one of the bearings secured to the main frame when the spindle is moved away from the anvil. Thus, the size of the gauge would have to be rather large. That is why the main scale of the above-described conventional gauge is supported at a position offset from the axis of the spindle by a predetermined distance and extends parallel to the spindle. However, this structure involves a problem that measuring errors are liable to be generated due to Abbe's principle. Furthermore, in this conventional gauge, the main scale supported by the arm member is liable to oscillate when the entire gauge oscillates, so that the relative distance between the scale and the position transducer is subject to fluctuations, thereby causing measuring errors.

It is an object of the present invention to provide a digital display micrometer gauge which can be used by the machinist who is used to the conventional micrometer gauge without causing him to experience any unfamiliarity and which allows high speed operation without involving any deterioration in measuring accuracy.

US-A-4561185 discloses a digital display micrometer gauge comprising a U-shaped main frame having an anvil; a spindle which can be axially displaced relatively to the main frame and one end of which can abut against the anvil; an engagement member provided at the other end of the spindle and protruding radially from the spindle; an inner sleeve having a slit in which the engagement member engages and which extends axially of the spindle, the inner sleeve being secured to the main frame; an outer sleeve which is fitted onto the outer periphery of the inner sleeve in such a way as to be circumferentially rotatable and which has in the inner peripheral section thereof a helical groove engaged with the engagement member; a main scale attached to the spindle; an index scale provided on the main frame so as to be opposed to the main scale; a linear encoder for detecting the displacement of the spindle from the relative displacement between the main scale and the index scale; and display means for displaying the output of the linear encoder in digital form.

According to the present invention, such a gauge is characterised in that a slide member having a larger diameter than the remainder of the spindle is provided at the end of the spindle adjacent the engagement member in such a way as to be in sliding contact with the inner surface of the inner sleeve in the vicinity of the engagement member to thereby support the spindle.

Many other features, advantages and additional objects of the present invention will become manifest to those versed in the art upon making reference to the detailed description which follows and the accompanying sheets of drawings, in which:
Fig. 1 is a front view of a digital display micrometer gauge according to a first embodiment of the present invention;
Fig. 2 is a sectional view of the gauge of the embodiment shown in Fig. 1;
Fig. 3 is an enlarged sectional view showing the spindle driving mechanism of the gauge of the embodiment shown in Fig. 1;
Fig. 4 is a sectional view taken in the direction of the arrows along line IV-IV of Fig. 2;
Fig. 5 is an exploded perspective view of the spindle driving mechanism shown in Fig. 3;
Fig. 6 is a sectional view illustrating how the thimble and outer sleeve of the spindle driving mechanism of Fig. 3 are mounted;
Fig. 7 is a sectional view taken in the direction of the arrows along line VII-VII of Fig. 2;
Fig. 8 is an exploded perspective view illustrating how a gap control means of the gauge of Fig. 1 is mounted;
Fig. 9 is an exploded perspective view of the gap control means shown in Fig. 8;
Fig. 10 is an exploded perspective view of the spindle of the gauge of the embodiment shown in Fig. 1;
Fig. 11 is a sectional view of a digital display micrometer gauge according to a second embodiment of the present invention;
Fig. 12 is an exploded perspective view showing the spindle driving mechanism of the gauge of the second embodiment;
Fig. 13 is a sectional view showing the spindle driving mechanism of the gauge of the second embodiment;
Fig. 14 is a sectional view taken in the direction of the arrows along line XIV-XIV of Fig. 13;
Fig. 15 is a front view of the outer sleeve of the gauge of the second embodiment;
Fig. 16 is a perspective view of a spindle to be mounted in a gauge according to still another embodiment of the present invention, with a main scale attached to the spindle; and
Fig. 17 is a front view of the spindle shown in Fig. 16.

In the accompanying drawings, the same components are indicated by the same reference numerals, and the description of such components will be omitted or only slightly touched upon when they are referred to again.

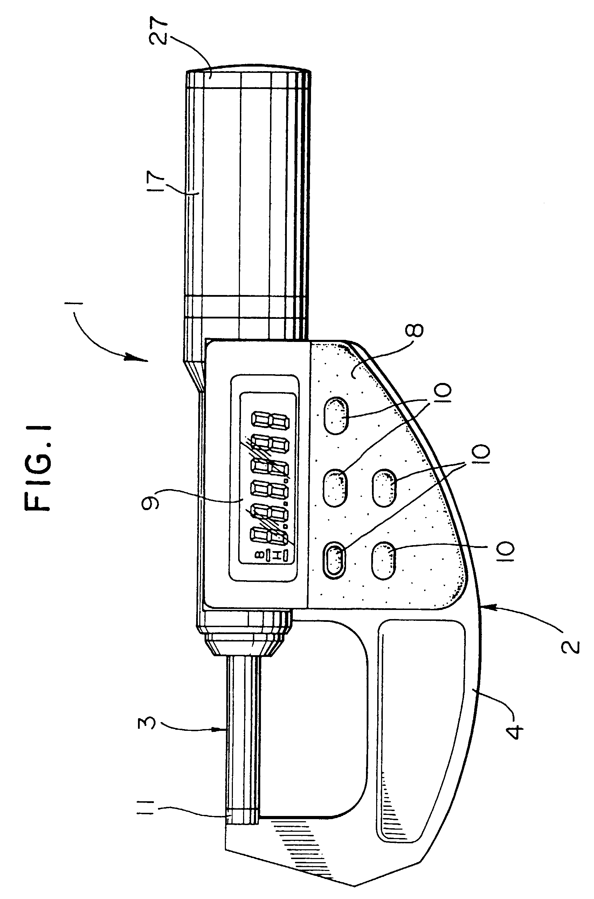

In Figs. 1 through 10, a digital display micrometer gauge 1 has a main body 2 of a closed, water/dust-proof structure. A spindle 3 can come out of and retract into the main body 2, which is provided with a U-shaped main frame 4, a spindle driving mechanism 5 for causing the spindle 3 to advance and retreat, a position transducer 6 for detecting the displacement amount of the spindle 3, a gap control means 7 provided between the U-shaped main frame 4 and the spindle 3, a cover member 8 provided on the front surface of the U-shaped main frame 4, and a digital display device 9 and a plurality of operating switches 10 which are provided on the front surface of the cover member 8.

The U-shaped main frame 4 has an anvil 11 at one end of its opening. At the other end of the opening of the main frame 4, the spindle 3, one end of which can abut against the anvil 11, is supported in such a way that it can be axially displaced. The spindle 3 comprises a spindle body 3A, one end of which can abut against the anvil 11, and a slide member 3B provided at the other end of the spindle body 3A.

The position transducer 6 is a capacitive type linear encoder, which comprises an index scale 29 arranged inside the U-shaped main frame 4 through the intermediary of the gap control means 7; and a main scale 31 arranged on the spindle body 3A through a scale mounting member 30.

The main scale 31 comprises a group of lattice electrodes aligned at a fixed pitch along the axial direction of the spindle 3 and a group of earth electrodes arranged between the group of lattice electrodes. The index scale 29 comprises a transmission electrode group consisting of a plurality of pairs of transmission electrode elements and a reception electrode group. The measurement principle of this capacitive type linear encoder is described in detail in, e.g. US-A-5,053,715.

The position transducer 6 is connected to the digital display device 9, shown in Fig. 1, through electric devices, such as a counter and CPU (not shown). By manipulating the operating switches 10, the displacement of the spindle 3 is displayed in digital form on the digital display device 9.

Apart from the above capacitive type linear encoder, it is also possible to employ a photoelectric type encoder utilizing a ray of light which is under the influence of lattice groups on the main and index scales, or a magnetic type encoder utilizing a magnetic action. However, using a capacitive type linear encoder as in the case of the gauge of the first embodiment is advantageous in that it requires a relatively small power consumption.

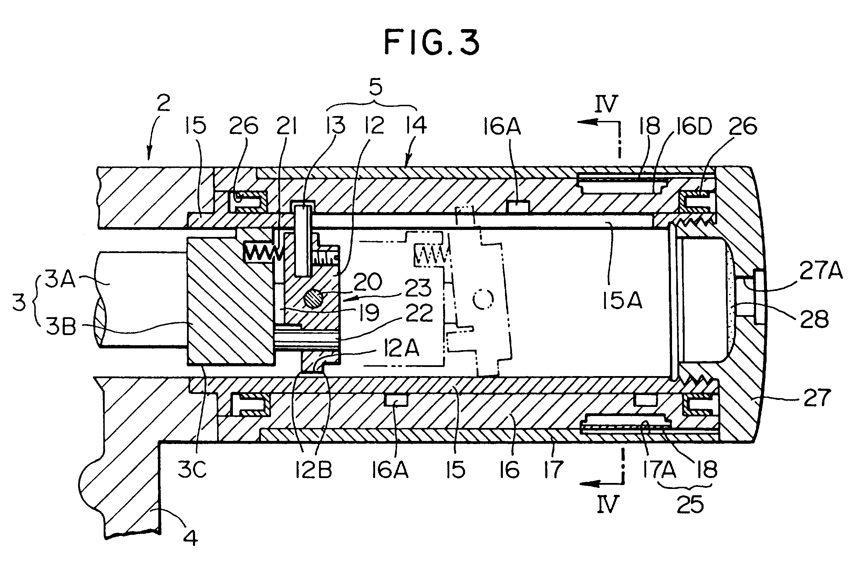

Fig. 3 is an enlarged view of the spindle driving mechanism 5, which comprises a stopper 12 attached to the other end of the slide member 3B of the spindle 3; a pin like engagement member 13 attached to the stopper 12; and an engagement-member driving mechanism 14 for causing the engagement member 13 to advance and retreat along the axial direction of the spindle 3.

The engagement-member driving mechanism 14 comprises an inner sleeve 15 one end of which is secured to the U-shaped frame 4 and which has a slit 15A into which the engagement member 13 is inserted and which extends along the axial direction of the spindle 3; an outer sleeve 16 fitted onto the outer periphery of the inner sleeve 15 in such a way as to be circumferentially rotatable and having in the inner peripheral section thereof a helical groove 16A which receives the engagement member 13; a thimble 17 rotatably fitted onto the outer peripheral surface of the outer sleeve 16; and two plate springs 18 arranged between the thimble 17 and the outer sleeve 16. When the thimble 17 is rotated in one direction, the torque of this rotation is transmitted to the spindle 3 through the plate springs 18, the helical groove 16A of the outer sleeve 16, and the engagement member 13, thereby causing the spindle 3 to advance toward the anvil 11. Rotating the thimble 17 in the other direction causes the spindle 3 to retreat. The groove 16A has a relatively large pitch. Specifically, it is larger than the screw pitch of the conventional micrometer.

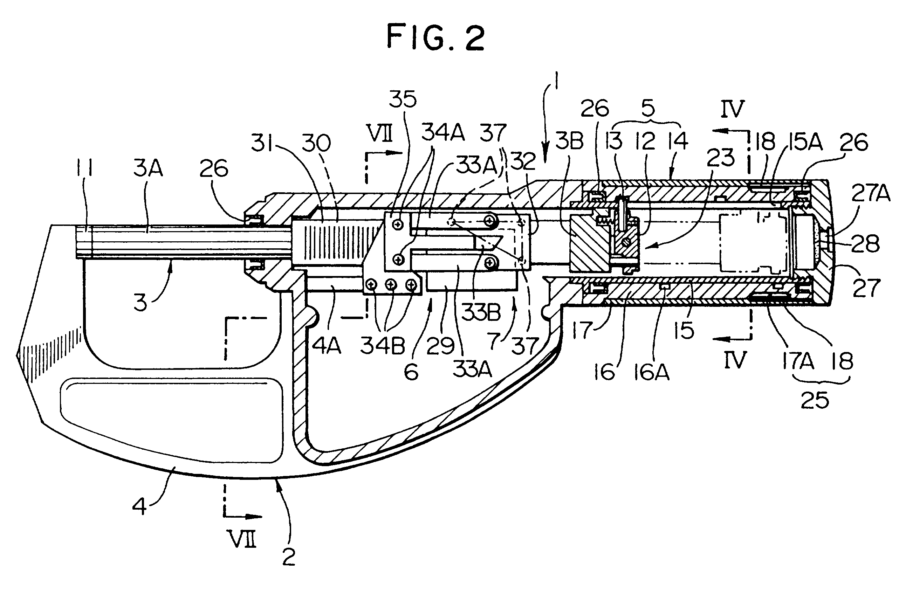

In the inner sleeve 15, the slide member 3B of the spindle 3 is slidably supported except for cutouts 3C formed therein. When the spindle 3 moves away from the anvil 11, the spindle body 3A, on which the main scale 31 is provided, is inserted into the inner sleeve 16, as indicated by the phantom line of Fig. 2.

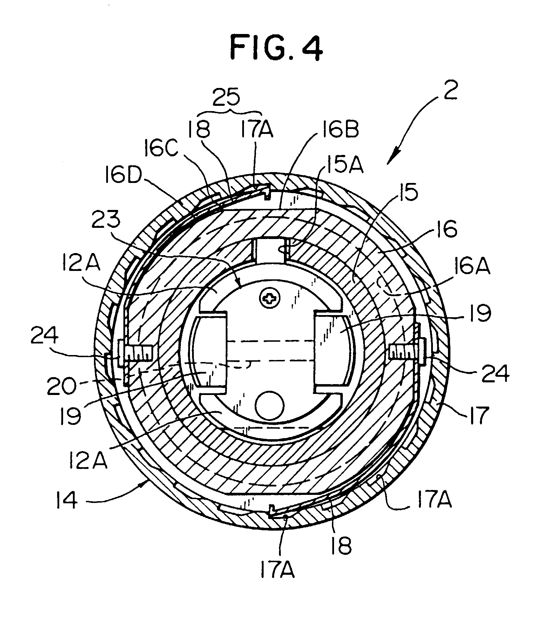

A pair of raised portions 19 are provided on the slide member 3B of the spindle 3 in such a way as to be opposed to each other, as shown in Fig. 4. A pin 20 extending along a diameter of the spindle 3 is fastened to the raised portions 19, and the stopper (the rotating member) 12 is rotatably supported by the pin 20.

The stopper 12 is formed so as to leave a gap (clearance) between it and the inner wall of the inner sleeve 15, and has a flange 12A exhibiting substantially right-angled edges 12B on the front and rear sides thereof with respect to the advance/retreat direction of the spindle 3. When the stopper 12 rotates on the pin 20, the edges 12B engage the inner surface of the inner sleeve 15.

A coil spring 21 for biasing the stopper 12 for clockwise rotation (as seen in Fig. 3) is embedded in the slide member 3B of the spindle 3, and a pin 22 for limiting such clockwise rotation of the engagement member 13 is embedded in the stopper 12. The coil spring 21 and the pin 22 constitute a holding means 23, which holds the stopper 12, with the engagement member 13 radially protruding from the spindle. When a force in excess of a certain level is applied to the engagement member 13 in the spindle advancing direction, the holding means 23 permits the stopper 12 to rotate counterclockwise (as seen in phantom in Fig. 3) against the biasing force of the coil spring 21.

In the first embodiment, cutouts 3C are formed in the slide member 3B of the spindle 3, and the remaining portion of the slide member 3B is slidable on the inner surface of the inner sleeve 15. Thus, if the edges 12B of the stopper 12 leave traces i.e. scratches in the form of recesses and protrusions on the inner surface of the inner sleeve 15, the slide member 3B can move without being hindered by these traces, so that the slide member 3B can slide smoothly on the inner surface of the inner sleeve 15 even after the operation of the holding means 23.

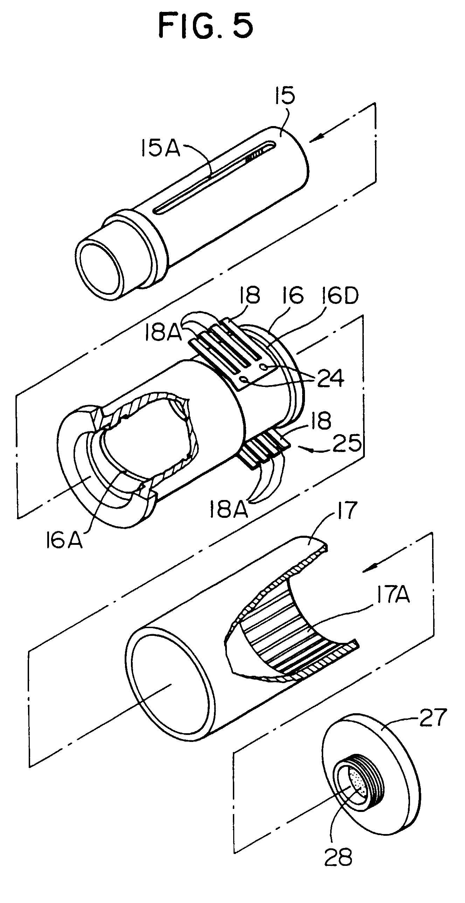

Figs. 4 through 6 show the mounting structure for the plate springs 18. Referring to Figs. 4 and 5, a recess 16D is formed in the outer periphery of the outer sleeve 16 around its entire circumference. Base portions of the plate springs 18 are attached in the recess 16D by means of screws 24. A ratchet wheel 17A, against which the tips of the plate springs 18 abut, is formed in the inner peripheral section of the thimble 17. The ratchet wheel 17A and the plate springs 18 constitute a constant pressing device 25. The springs bear resiliently on the ratchet wheel and hence transmit a frictional drag from the thimble 17 to the outer sleeve 16. When the thimble 17 rotates in one direction to cause a torque not smaller than a certain level to be generated between the outer sleeve 16 and the thimble 17, the plate springs 18 are bent to cause the thimble 17 to overcome the frictional drag and override the ratchet and hence to race relatively to the outer sleeve 16.

Each plate spring 18 has a plurality of notches 18A extending from the base portion to the tip thereof. By appropriately setting the width of the plate springs 18, it is possible to adjust the resilient force of the plate springs 18 and, further, the force with which the constant pressing device 25 operates.

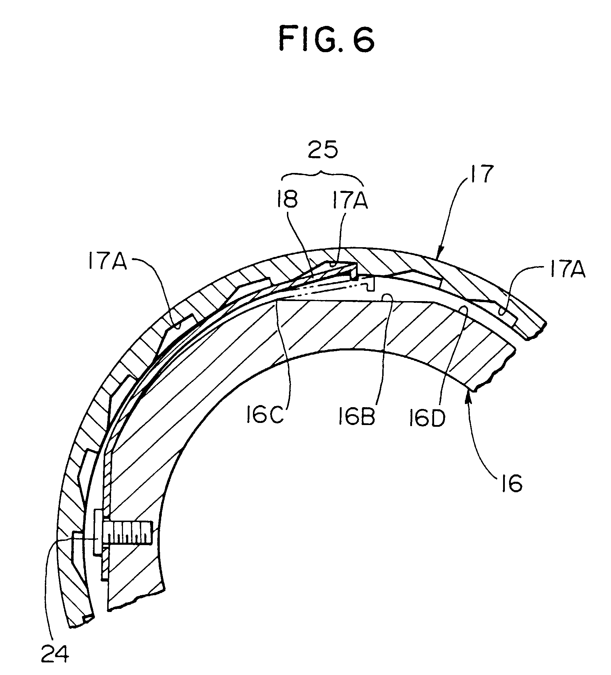

As shown in Fig. 6, cutout sections 16B are formed in the recess 16D of the outer sleeve 16. An edge 16C of each cutout section 16B serves as a bending fulcrum when the plate spring 18 is bent upon the racing of the thimble 17 relatively to the outer sleeve 16.

As shown in Fig. 2, ring-like seal members 26 are respectively provided between the spindle 3 and the U-shaped frame 4 and between the inner sleeve 15 and the outer sleeve 16. A cover member in the form of an end cap 27 is screw threadedly engaged with the open end portion of the inner sleeve 15. The end cap 27 has an opening 27A through which the interior of the gauge body 2 communicates with the exterior.

A porous member 28 for closing the opening 27A is attached to the inner side of the end cap 27. The porous member 28 consists of a synthetic resin filter (OLEO VENTIFILTER (product name) manufactured by GORE-TEX) which allows transmission of gas but not of liquid or solid, whereby it is possible to prevent changes in the pneumatic pressure of the closed space inside the U-shaped frame 4 when the spindle 3 moves in and out.

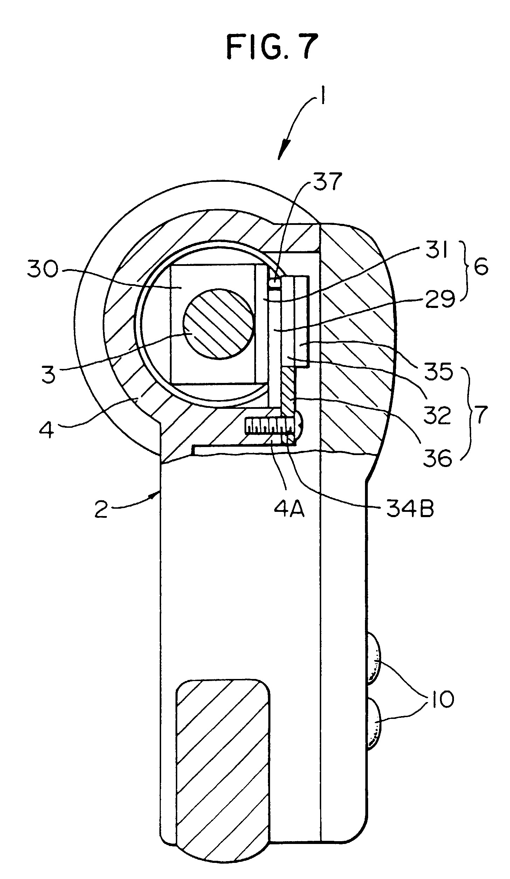

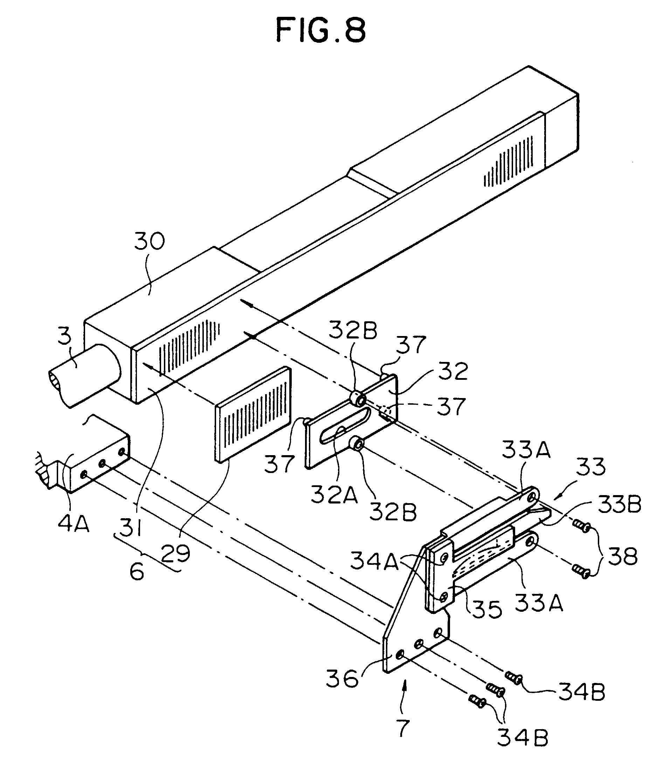

Figs. 7 through 9 show the structure of the gap control means 7 in detail. As shown in Figs. 7 and 8, the gap control means 7 comprises a first mounting member 32 to which the index scale 29 is bonded, a second mounting member 33 to which the first mounting member 32 is attached by means of screws 38, and a third mounting member 36 to which the second mounting member 33 is attached by means of screws 34A and a T-shaped member 35. The third mounting member 36 is attached to a mounting protrusion 4A of the U-shaped frame 4 by means of screws 34B.

The first mounting member 32 has three protrusions 37 positioned on the outer side of the index scale 29. The tips of the protrusions 37 slidably abut against the electrode edge portions of the main scale 31, whereby the index scale 29 and the main scale 31 can move relative to each other along the axial direction of the spindle, and are held with a predetermined gap therebetween. Further, a hole 32A is formed in the central portion of the first mounting member 32, and two protrusions 32B for mounting the screws 38 are formed respectively on each side of the hole 32A.

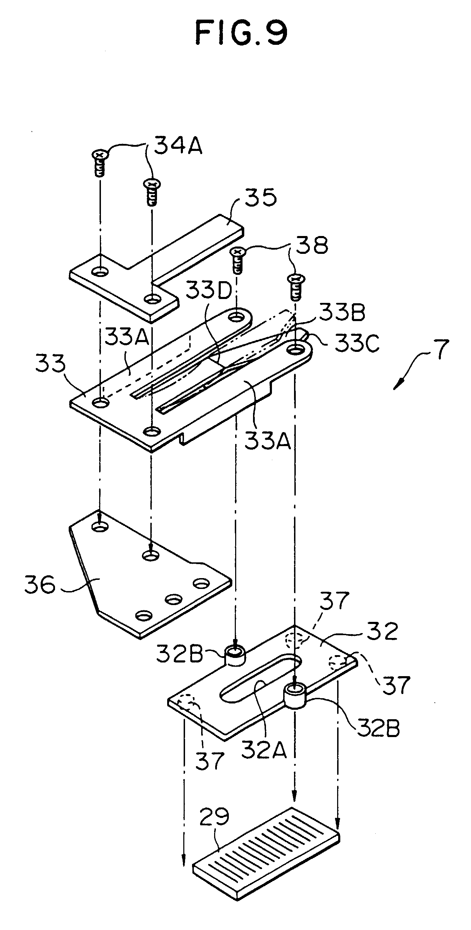

Referring to Fig. 9, the second mounting member 33 is a plate spring having notches between side portions 33A and a central portion 33B thereof. Edge sections of the side portions 33A are bent so as to enhance their rigidity. The central portion 33B comprises a forward end section 33C and a middle section 33D, which are bent toward the first mounting member 32. The middle section 33D is pressed toward the first mounting member 32 by the T-shaped plate member 35, whereby the central portion 33B functions as a biasing means. The biasing centre of the central portion 33B is at a position where the forward end section 33C abuts against the first mounting member 32. This position corresponds to the centre of gravity of the imaginary triangle having the three protrusions 37 as the vertices (See Fig. 2). Thus, by applying a uniform force to each of the three protrusions 37, a biasing force can be exerted on the main scale 31.

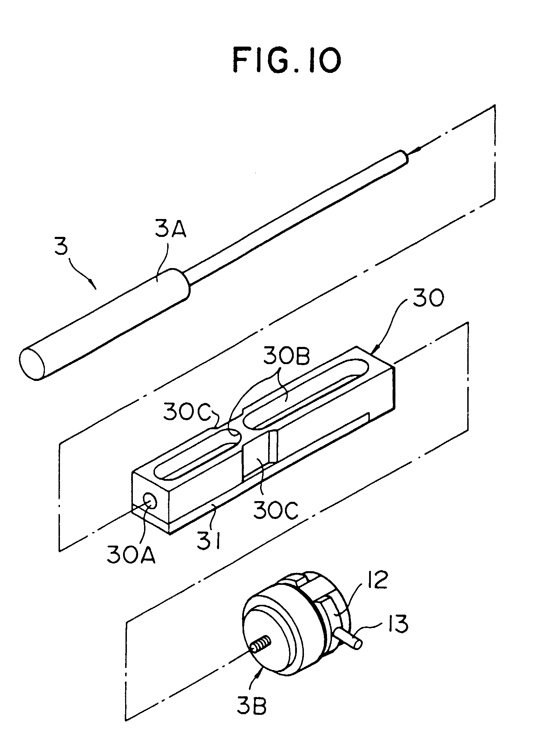

Fig. 10 shows the mounting structure for the scale mounting section 30 and the spindle 3. In Fig. 10, the spindle body 3A is formed as a stepped cylinder having a large-diameter and a small-diameter section, the latter of which is screw threadedly engaged with the slide member 3B. The back side of the main scale 31 is bonded to the scale mounting member 30, which has a longitudinal through-hole 30A through which the small-diameter section of the spindle body 3A is inserted. Thus, the entire spindle body 3A, including both ends with respect to the axial direction of the spindle, is attached to the scale mounting section 30.

The scale mounting section 30 has cavities 30B to reduce its weight, and a side recess 30C for accommodating surplus adhesive squeezed out when the main scale 31 is glued to this scale mounting section 30. In the case of a gauge of a type which generates electricity through the advance and retreat of the spindle 3, a rack (not shown) is formed on a side surface of the scale mounting member 30, and an electric generator having a pinion in mesh with this rack is arranged in the gauge body 2.

In the gauge of the first embodiment, the thimble 17 of the spindle driving mechanism 5 is rotated in one direction, with a workpiece to be measured placed between the anvil 11 and one end of the spindle 3. The torque of this rotation is transmitted to the constant pressing device 25, the helical groove 16A of the outer sleeve 16, the engagement member 13 and the stopper 12. However, due to the structure which only allows displacement along the longitudinal direction of the slit, the spindle 3 and the stopper 12 do no rotate, and advance only along the axial dimension. Since the groove 16A has a relatively large pitch,this advance of the spindle 3 takes place at a higher speed than in the conventional screw-type micrometer gauge. The displacement of the spindle 3 from the anvil 11 is detected by the position transducer 6, having the main scale 31 and the index scale 29, and is displayed on the digital display device 9. When one end of the spindle 3 has abutted against the workpiece to be measured, the operator reads the displacement amount as displayed at that time.

When the thimble 17 is further rotated with one end of the spindle 3 abutting against the workpiece to be measured, a force is generated which is inclined to cause the stopper 12 to rotate. When this force reaches a certain level, the holding means 23 operates, and the advance of the spindle 3 is hindered by the stopper 12. That is, an edge 12B of the stopper 12 engages in the inner surface of the inner sleeve 15 against the resilient force of the coil spring 21. Thus, by appropriately adjusting the resilient force of the coil spring 21, the measurement pressure during measurement of the workpiece can always be kept constant. In some cases, the spindle 3 could be caused to retreat by a strong reactive force from the workpiece to be measured. However, since the stopper 12 receives a counterclockwise torque and the edge 12B engages in the inner surface of the inner sleeve 15, the retreat of the spindle 3 is hindered.

When the thimble 17 is further rotated, it becomes inclined to rotate relative to the outer sleeve 16. When this torque exceeds a certain level, the constant pressing device 25 operates to cause the thimble 17 to race. This prevents an excessive force from being applied to the engagement member 13 to damage the same. The lock effected by the stopper 12 is released by rotating the thimble 17 in the reverse direction to cause the stopper 12 to retreat.

When the thimble 17 is rotated in the reverse direction for a next measurement, the spindle 3 moves away from the anvil 11. With this movement, the spindle body 3A, on which the main scale 31 is provided, is allowed to move into the inner sleeve 15.

Thus, in accordance with the first embodiment, the spindle body 3A, on which the main scale 31 is provided, can be inserted into the inner sleeve 15. By thus providing the main scale 31 in close proximity to the spindle body 3A, the offset amount of the main scale 31 with respect to the spindle body 3A can be diminished. Thus, an improvement in theoretical measuring accuracy can be expected due to Abbe's principle. Further, since the essential components, such as the spindle 3, the U-shaped main frame 4 and the thimble 17, are not different from those of the conventional micrometer, which means the micrometer gauge of this embodiment can be used by machinists used to the conventional micrometer gauge without causing them to experience any unfamiliarity.

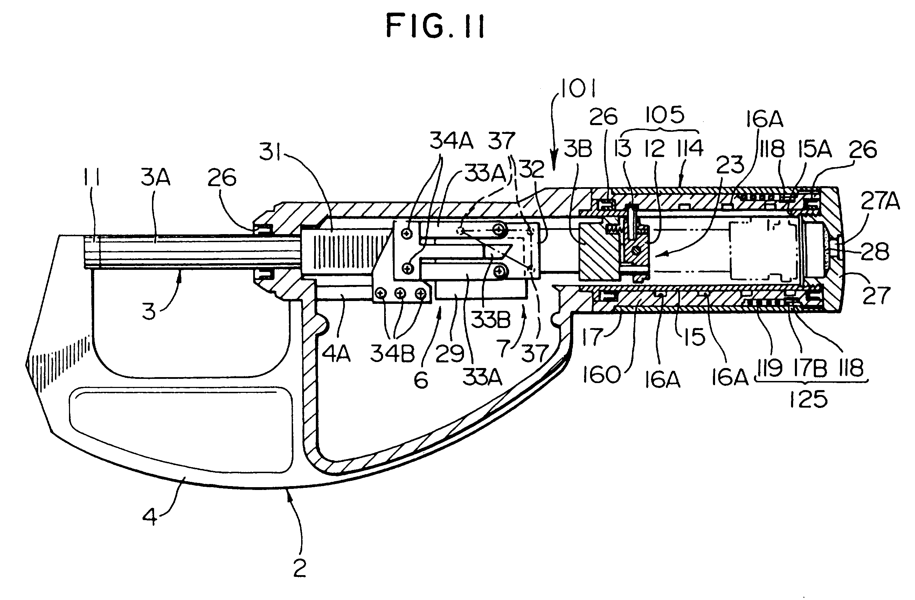

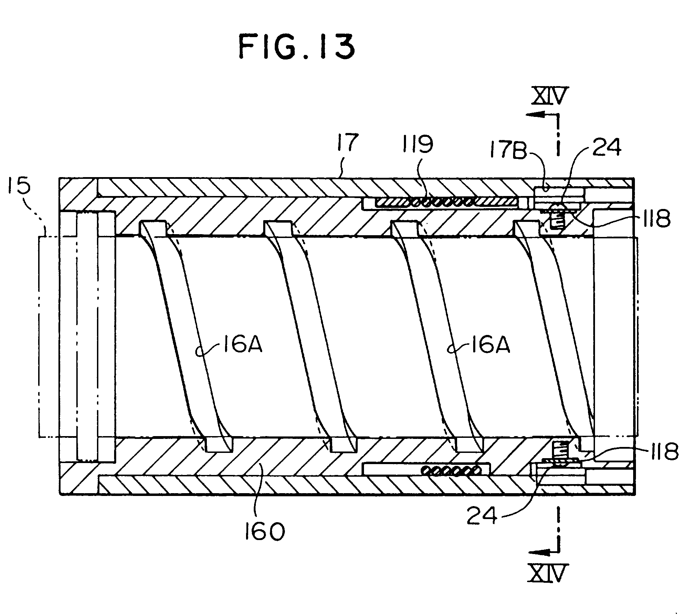

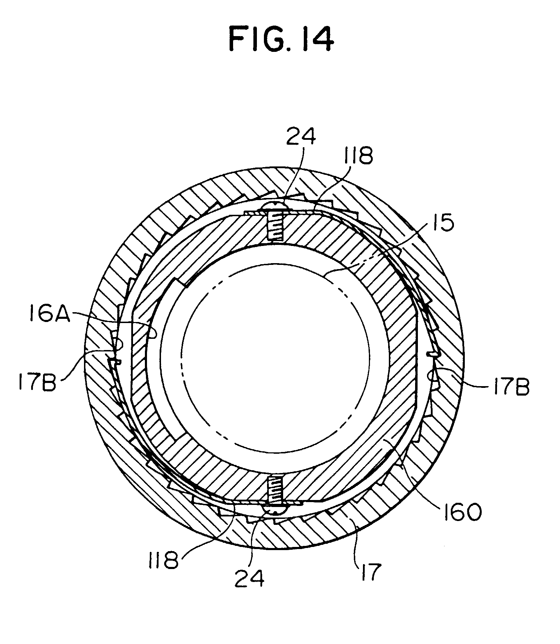

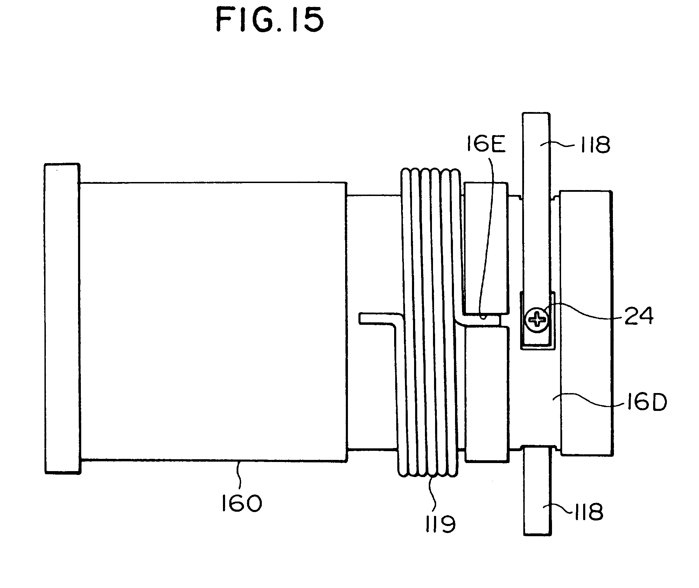

Figs. 11 through 15 illustrate the second embodiment of the present invention. The only difference between the first and second embodiments lies in the structure of the constant pressing device.

A spindle driving mechanism 105 comprises the stopper 12, the engagement member 13, and an engagement member driving mechanism 114 for causing the engagement member 13 to advance and retreat along the axial direction of the spindle 3. The engagement member driving mechanism 114 comprises the inner sleeve 15, an outer sleeve 160, the thimble 17, and two plate springs 118 and one coil spring 119 which are arranged between the thimble 17 and the outer sleeve 160. When the thimble 17 is rotated in one direction, the torque of this rotation is transmitted to the spindle 3 through the plate springs 118, the coil spring 119, the spiral groove 16A of the outer sleeve 160, and the engagement member 13 to thereby cause the spindle 3 to advance. Rotation of the thimble 17 in the other direction causes the spindle 3 to retreat.

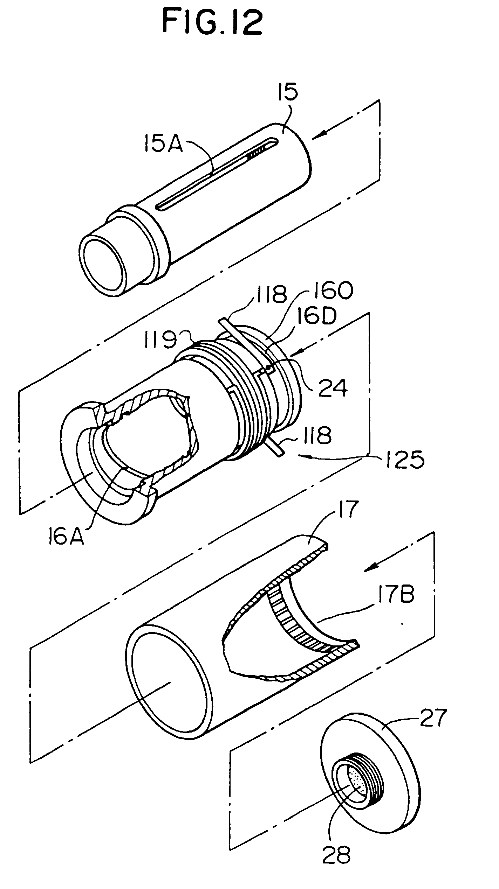

In the second embodiment, the ratchet wheel 17B, the plate springs 118, and the coil spring 119 constitute a constant pressing device 125. The structure of the constant pressing device 125 is shown in detail in Figs. 12 through 15.

In the drawings, the coil spring 119 is mounted in such a way as to leave a gap between it and the outer peripheral section of the outer sleeve 160. One end of the coil spring is engaged with an engagement groove 16E of the outer sleeve 160 and fastened thereto, and the other end thereof is not fastened. The outer side surface of the cylindrical body of the coil spring 119 is in frictional press contact with the inner surface of the thimble 17. When the thimble 17 is rotated in the direction to cause the spindle 3 to move toward the anvil 11, a force inclined to inwardly wind up the coil spring 119 is generated. Thus, when the spindle 3 meets with a strong resistance, and a force larger than needed for winding up the coil spring 119 is applied to the thimble 17, the coil spring 119 is wound up and torque ceases to be transmitted to the outer sleeve 160, thereby causing the thimble 17 to race. Thus, by appropriately selecting the material, etc. of the coil spring 119, it is possible to set the measuring force at the time of measurement at a desired value. Conversely, when the thimble 17 is rotated in the direction to cause the spindle 3 to move away from the anvil 11, a force inclined to outwardly expand the coil spring 119 is generated to integrally unite the thimble 17 and the outer sleeve 160 with each other, so that the spindle 3 can be moved with a strong force.

Generally speaking, the plate springs 118 are provided solely for the purpose of indicating the racing of the thimble 17 relative to the outer sleeve 160 through the clicking sound generated by the tips of these plate springs when they intermittently hit against the ratchet wheel 17B. The resilient force of these plate springs is set to be relatively weak. Thus, the width dimension of the ratchet wheel 17B is smaller than that of the ratchet wheel 17A of the first embodiment so as to be in conformity with the width of the plate springs 118. Further, the pitch of the ratchet wheel 17B of the second embodiment is smaller than that of the ratchet wheel 17A of the first embodiment.

The operation of the second embodiment is substantially the same as that of the first embodiment. However, the operation of the constant pressing device 125 differs from that of the first embodiment. That is, when the thimble 17 is rotated with one end of the spindle 3 abutting against the workpiece to be measured, a torque larger than the force needed for the above-mentioned winding up is applied between the outer sleeve 160 and the thimble 17, and the coil spring 119 is inwardly wound up, with the result that the thimble 17 races with respect to the outer sleeve 160. This racing of the thimble 17 causes the plate springs 118 to hit against the ratchet wheel 17B to intermittently generate a clicking sound as they repeatedly bend and stretch. The interval of the clicks is shorter than in the first embodiment, so that the operator is made aware of the racing of the thimble more quickly and reliably than in the first embodiment.

The present invention is not restricted to the constructions of the above-described embodiments, but covers various modifications.

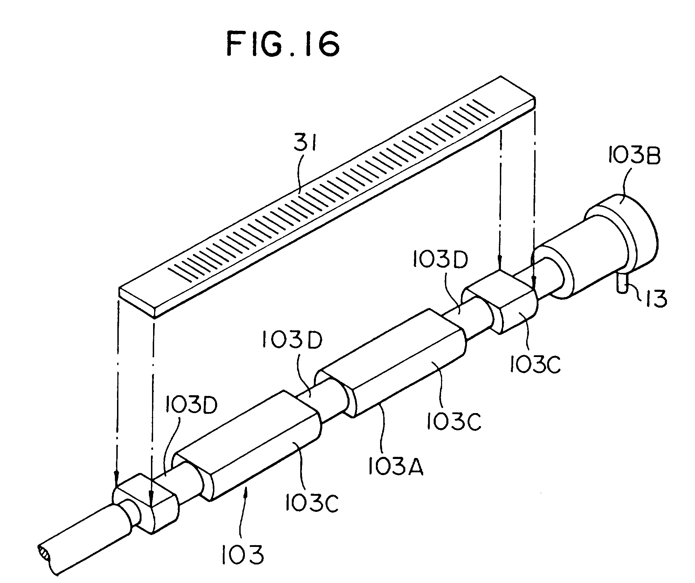

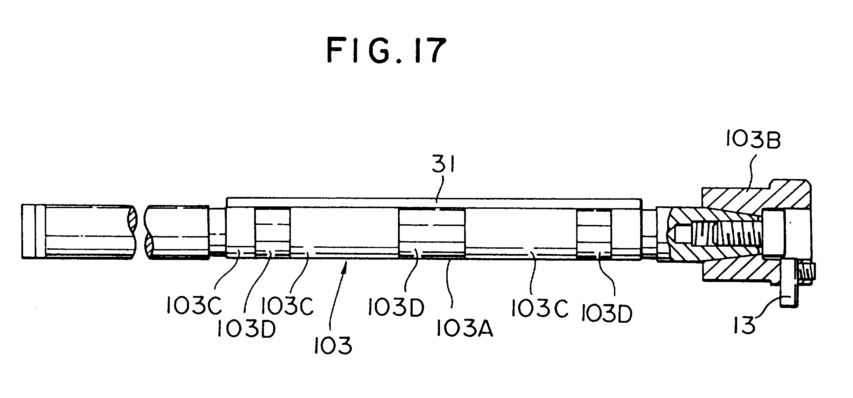

For example, while in the above embodiments the main scale 31 is attached to the spindle 3 through the scale mounting member 30, it is also possible to adopt a structure in which the main scale 31 is directly attached to a spindle body 103A of a spindle 103, as shown in Figs. 16 and 17. The spindle body 103A is formed of a cylindrical member having a plurality of large diameter and small diameter sections 103C and 103D which are alternately arranged. The large diameter sections 103C are partly cut off on both sides of the axis of this cylindrical member, and the resulting flat, truncated sections have a thickness that is equal to the diameter of the small diameter sections 103D. Adhesive is applied to the small diameter sections 103D of the spindle body 103A and to the back surface of the main scale 31 so that the entire main scale 31 may be attached to the spindle body 103A.

Further, the stopper 12 and the holding means 23, provided in the above embodiments, may be omitted, as shown in Figs. 16 and 17. Instead, the engagement member 13 may be directly provided on a slide member 103B of the spindle 103. The principal objects of the present invention can also be achieved with such a structure. Omission of the stopper 12 and the holding means 23 leads to a reduction in the number of parts and facilitates the assembly work. In this case, the measuring pressure of the spindle 3 can be adjusted by appropriately varying the screw pitch of the constant pressing device 25, 125 and the spiral groove 16A of the outer sleeve 16. That is, by increasing the screw pitch, the displacement amount of the spindle per thimble rotation increases, and the measuring pressure of the spindle 3 decreases. On the other hand, by reducing the screw pitch, the measuring pressure of the spindle 3 per thimble rotation increases. Thus, by forming the spiral groove 16A in such a way that its screw pitch gradually increases as the spindle 3 approaches the anvil 11, it is possible for the measuring pressure to decrease in proportion the distance between the spindle 3 and the anvil 11. The constant pressing means for keeping the measuring force constant is not essential to the present invention, so that it may be omitted.

While in the above embodiments only one spiral groove 16A is formed in the outer sleeve 16, it is also possible to form a plurality of such spiral grooves. In this case, the stopper 12 and the holding means 23 are not provided, and engagement members 13 are arranged in the slide member 103B of the spindle 103 in such a way that they respectively engage with the plurality of spiral grooves. This arrangement makes it possible to reduce the load per engagement member 13, thereby improving the durability of the gauge.

## Claims

1. A digital display micrometer gauge comprising a U-shaped main frame (4) having an anvil (11); a spindle (3) which can be axially displaced relatively to the main frame and one end of which can abut against the anvil; an engagement member (13) provided at the other end of the spindle and protruding radially from the spindle; an inner sleeve (15) having a slit (15A) in which the engagement member engages and which extends axially of the spindle, the inner sleeve being secured to the main frame; an outer sleeve (16) which is fitted onto the outer periphery of the inner sleeve in such a way as to be circumferentially rotatable and which has in the inner peripheral section thereof a helical groove (16A) engaged with the engagement member; a main scale (31) attached to a side surface of the spindle in such a way as to extend along the axis of the spindle so that the main scale is inserted into the inner sleeve upon displacement of the spindle; an index scale (29) provided on the main frame so as to be opposed to the main scale; a linear encoder (6) for detecting the displacement of the spindle from the relative displacement between the main scale and the index scale; and display means (9) for displaying the output of the linear encoder in digital form; characterised in that a slide member (3B) having a larger diameter than the remainder of the spindle is provided at the other end of the spindle in such a way as to be in sliding contact with the inner surface of the inner sleeve (15) in the vicinity of the engagement member (13) to thereby support the spindle.

2. A gauge according to claim 1, wherein the linear encoder (6) is a capacitive type linear encoder.

3. A gauge according to claim 1, wherein the linear encoder (6) is an optical type linear encoder.

4. A gauge according to any one of the preceding claims, wherein the engagement member (13) is attached to a rotating member (12) which is supported at an end of the slide member (3B) in such a way as to be rotatable around an axis perpendicular to the axis of the spindle and to the direction of the protrusion of the engagement member; and there are retaining means (22) for retaining the rotating member in a predetermined position but allowing the rotating member to rotate in one direction until a side surface (12B) thereof abuts against the inner peripheral surface of the inner sleeve (15) when a force larger than a predetermined pressure is applied to the engagement member in the direction of the anvil.

5. A gauge according to claim 4, wherein a compression spring (21) is interposed between the rotating member and the slider member (3B) to urge the rotating member to rotate in the opposite direction and hence to provide a predetermined force urging the spindle (3) towards the anvil (11) when the side surface (12B) of the rotating member abuts against the inner sleeve.

6. A gauge according to any one of the preceding claims, further comprising a gap control means (7) for keeping a gap between the main scale (31) and the index scale (29) constant.

7. A gauge according to claim 6, wherein the gap control means includes protrusions (37) provided on at least one of the main scale and the index scale; and biasing means (33) which is provided on the U-shaped main frame and which is arranged to exert a biasing force urging the main and index scales towards one another.

8. A gauge according to claim 7, wherein three of the protrusions (37) are formed, the biasing centre of the biasing means being positioned at the centre of gravity of a notional triangle having these three protrusions as the vertices.

9. A gauge according to any one of the preceding claims, wherein a thimble (17) is fitted onto the outer periphery of the outer sleeve (16) in such a way as to be circumferentially rotatable; and constant pressing means (25) arranged between the inner periphery of the thimble and the outer periphery of the outer sleeve and arranged to cause the thimble to race with respect to the outer sleeve when a torque not smaller than a certain level is applied to the thimble and the spindle is engaging a workpiece and resisting further axial movement.

10. A gauge according to claim 9, wherein the constant pressing means has a coil spring (119) arranged between the outer periphery of the outer sleeve (16) and the inner periphery of the thimble (17), and wherein a cylindrical outer surface of the coil spring presses frictionally against the inner surface of the thimble, with one end of the coil spring being secured to the outer sleeve.

11. A gauge according to claim 10, wherein the constant pressing means also includes plate springs (118) arranged between the outer periphery of the outer sleeve (16) and the inner periphery of the thimble (17), one end of each of the plate springs being secured to the outer sleeve, with the other end thereof abutting frictionally against a ratchet wheel (17B) formed in the inner periphery of the thimble.

12. A gauge according to claim 9, wherein the constant pressing means includes at least one plate spring (18) one end of which is attached to the outer periphery of the outer sleeve (16) and the other end of which abuts against a ratchet wheel (17A) formed in the inner periphery section of the thimble, and wherein a respective cutout section (16B) is formed in the outer periphery of the outer sleeve, an edge (16C) of the cutout section serving as a bending fulcrum against which a central portion of the plate spring abuts when the thimble races with respect to the outer sleeve to enable the plate spring to bend.

13. A gauge according to any one of the preceding claims, further comprising a cover member (27) which closes one open end of the inner sleeve (15) and to which there is attached a porous member which allows transmission of gas but not of liquid and solid between the interior of the inner sleeve and the atmosphere.

## Patentansprüche

1. Mikrometer-Meßgerät mit digitaler Anzeige, das aufweist: einen U-förmigen Hauptrahmen (4) mit einem Gegenzapfen (11); eine Spindel (3), die axial relativ zum Hauptrahmen verschiebbar ist und deren eines Ende sich am Gegenzapfen anlegen kann; ein Eingriffelement (13), das am anderen Ende der Spindel vorgesehen ist und radial von der Spindel absteht; eine innere Hülse (15) mit einem Schlitz (15A), in den das Eingriffelement eingreift und der sich in Axialrichtung der Spindel erstreckt, wobei die innere Hülse am Hauptrahmen befestigt ist; eine äußere Hülse (16), die auf dem äußeren Umfang der inneren Hülse so eingesetzt ist, daß sie in Umfangsrichtung drehbar ist, und die in ihrem inneren Umfangsabschnitt eine wendelförmige Nut (16A) aufweist, mit der das Eingriffelement in Eingriff steht; eine an einer Seitenfläche der Spindel derart befestigte Hauptskala (31), daß sie sich längs der Achse der Spindel erstreckt, so daß die Hauptskala bei Verschiebung der Spindel in die innere Hülse eingeführt wird; eine am Hauptrahmen derart vorgesehene Indexskala (29), daß sie der Hauptskala gegenüberliegt; einen linearen Codierer (6) zum Messen der Verschiebung der Spindel anhand der relativen Verschiebung zwischen der Hauptskala und der Indexskala; und Anzeigemittel (9) zum Anzeigen der Ausgangsgröße des linearen Codierers in digitaler Form; dadurch gekennzeichnet, daß ein Gleitelement (3B) mit einem größeren Durchmesser als der übrige Teil der Spindel am anderen Ende der Spindel derart angeordnet ist, daß es mit der inneren Oberfläche der inneren Hülse (15) in der Nähe des Eingriffelements (13) in gleitender Berührung steht, um dadurch die Spindel zu stützen.

2. Meßgerät nach Anspruch 1, bei dem der lineare Codierer (6) ein kapazitiver linearer Codierer ist.

3. Meßgerät nach Anspruch 1, bei dem der lineare Codierer (6) ein optischer linearer Codierer ist.

4. Meßgerät nach einem der vorstehenden Ansprüche, bei dem das Eingriffelement (13) an einem rotierenden Element (12) angebracht ist, das an einem Ende des Gleitelements (3B) derart gelagert ist, daß es um eine senkrecht zur Achse der Spindel und zur Richtung, in der das Eingriffelement vorsteht, stehende Achse drehbar ist; und Anhaltemittel (22) vorgesehen sind, die das rotierende Element in einer vorbestimmten Lage anhalten, dem rotierenden Element jedoch ermöglichen, sich in der einen Richtung so weit zu drehen, bis dessen eine Seitenfläche (12B) an der inneren Umfangsfläche der inneren Hülse (15) anschlägt, wenn eine Kraft, die größer als ein vorbestimmter Druck ist, auf das Eingriffelement in Richtung des Gegenzapfens ausgeübt wird.

5. Meßgerät nach Anspruch 4, bei dem eine Druckfeder (21) zwischen dem rotierenden Element und dem Gleitelement (3B) angeordnet ist, um auf das rotierende Element einen Druck auszuüben, so daß es in entgegengesetzter Richtung rotiert und mithin eine vorbestimmte Kraft ausübt, die die Spindel (3) in Richtung auf den Gegenzapfen (11) drückt, wenn die Seitenfläche (12B) des rotierenden Elements an der inneren Hülse anliegt.

6. Meßgerät nach einem der vorstehenden Ansprüche, das ferner ein Spaltregelmittel (7) zur Konstanthaltung eines Spalts zwischen der Hauptskala (31) und der Indexskala (29) aufweist.

7. Meßgerät nach Anspruch 6, bei dem das Spaltregelmittel Vorsprünge (37) an der Hauptskala und/oder der Indexskala und ein Vorspannungsmittel (33) aufweist, das an dem U-förmigen Hauptrahmen vorgesehen und so angeordnet ist, daß es eine Vorspannungskraft ausübt, die die Haupt- und Indexskala gegeneinanderdrückt.

8. Meßgerät nach Anspruch 7, bei dem drei der Vorsprünge (37) ausgebildet sind, wobei der Vorspannungsmittelpunkt des Vorspannungsmittels im Schwerpunkt eines gedachten Dreiecks liegt, das diese drei Vorsprünge als Scheitel aufweist.

9. Meßgerät nach einem der vorstehenden Ansprüche, bei dem eine Muffe (17) auf dem äußeren Umfang der äußeren Hülse (16) so angeordnet ist, daß sie in Umfangsrichtung drehbar ist; und ein konstant drükkendes Mittel (25) zwischen dem inneren Umfang der Muffe und dem äußeren Umfang der äußeren Hülse so angeordnet ist, daß es bewirkt, daß die Muffe relativ zur äußeren Hülse läuft, wenn auf die Muffe ein Drehmoment ausgeübt wird, das nicht kleiner als ein vorbestimmter Betrag ist, und die Spindel an einem Werkstück anliegt und einer weiteren Axialbewegung widersteht.

10. Meßgerät nach Anspruch 9, bei dem das konstant drückende Mittel eine Schraubenfeder (119) zwischen dem äußeren Umfang der äußeren Hülse (16) und dem inneren Umfang der Muffe (17) aufweist und bei dem eine zylindrische äußere Fläche der Schraubenfeder reibend gegen die innere Umfangsfläche der Muffe drückt, wobei das eine Ende der Schraubenfeder an der äußeren Hülse befestigt ist.

11. Meßgerät nach Anspruch 10, bei dem das konstant drückende Mittel ferner Blattfedern (118) zwischen dem äußeren Umfang der äußeren Hülse (16) und dem inneren Umfang der Muffe (17) aufweist, wobei das eine Ende der Blattfedern an der äußeren Hülse befestigt ist und ihr anderes Ende reibend an einem Sperrad (17B) anliegt, das im inneren Umfang der Muffe ausgebildet ist.

12. Meßgerät nach Anspruch 9, bei dem das konstant drückende Mittel wenigstens eine Blattfeder (18) aufweist, deren eines Ende am äußeren Umfang der äußeren Hülse (16) angebracht ist und deren anderes Ende am Sperrad (17A) anliegt, das in dem inneren Umfangsabschnitt der Muffe ausgebildet ist, und bei dem ein entsprechender ausgeschnittener Abschnitt (16B) im äußeren Umfang der äußeren Hülse ausgebildet ist, wobei eine Kante (16C) des ausgeschnittenen Abschnitts als Biegungsstützpunkt dient, an dem ein mittlerer Teil der Blattfeder anliegt, wenn die Muffe relativ zur äußeren Hülse läuft, um die Blattfeder biegen zu können.

13. Meßgerät nach einem der vorstehenden Ansprüche, das ferner einen Deckel (27) aufweist, der das eine offene Ende der inneren Hülse (15) verschließt und an dem ein poröses Element angebracht ist, das den Durchgang von Gas, aber keiner Flüssigkeit und keines Feststoffes, zwischen dem Inneren der inneren Hülse und der Atmosphäre zuläßt.

## Revendications

1. Micromètre à affichage numérique comprenant une armature principale (4) en forme de U comportant une butée (11) ; une broche (3) qui peut être déplacée axialement pas rapport à l'armature principale et dont une extrémité peut venir en butée contre la butée ; un élément d'engagement (13) situé à l'autre extrémité de la broche et faisant saillie radialement par rapport à la broche ; un manchon intérieur (15) ayant une fente (15A) dans lequel l'élément d'engagement s'engage et qui s'étend axialement par rapport à la broche, le manchon intérieur étant fixé à l'armature principale ; un manchon extérieur (16) qui est ajusté sur la périphérie extérieure du manchon intérieur de façon à être circonférentiellement rotatif, et qui comporte, dans sa section périphérique intérieure, une rainure hélicoïdale (16A) en prise avec l'élément d'engagement ; une échelle principale (31) fixée à une surface latérale de la broche, de façon à s'étendre suivant l'axe de la broche, de sorte que l'échelle principale est insérée dans le manchon intérieur lors du déplacement de la broche ; une échelle d'index (29) située sur l'armature principale, de façon à faire face à l'échelle principale ; un encodeur linéaire (6) pour mesurer le déplacement de la broche à partir du déplacement relatif entre l'échelle principale et l'échelle d'index ; et un moyen d'affichage (9) pour afficher la sortie de l'encodeur linéaire sous forme numérique ; caractérisé par le fait qu'un élément coulissant (3B), ayant un diamètre plus important que le reste de la broche, est situé à l'autre extrémité de la broche, de façon à être en contact coulissant avec la surface intérieure du manchon intérieur (15) dans le voisinage de l'élément d'engagement (13) pour supporter ainsi la broche.

2. Instrument de mesure selon la revendication 1, dans lequel l'encodeur linéaire (6) est un encodeur linéaire de type capacitif.

3. Instrument de mesure selon la revendication 1, dans lequel l'encodeur linéaire (6) est un encodeur linéaire de type optique.

4. Instrument de mesure selon l'une quelconque des revendications précédentes, dans lequel l'élément d'engagement (13) est fixé à un élément rotatif (12) qui est supporté à une extrémité de l'élément coulissant (3B) de façon à pouvoir être mis en rotation autour d'un axe perpendiculaire à l'axe de la broche et à la direction de la protubérance de l'élément d'engagement ; et dans lequel se trouvent des moyens de retenue (22) pour retenir l'élément rotatif dans une position prédéterminée, mais permettre à l'élément rotatif de tourner dans un sens jusqu'à ce que sa surface latérale (12B) vienne en butée contre la surface périphérique intérieure du manchon intérieur (15) quand une force plus importante qu'une pression prédéterminée est appliquée au moyen d'engagement dans la direction de la butée.

5. Instrument de mesure selon la revendication 4, dans lequel un ressort de compression (21) est interposé entre l'élément rotatif et l'élément coulissant (3B) pour pousser l'élément rotatif à tourner dans le sens opposé, et par conséquent, pour fournir une force prédéterminée poussant la broche (3) en direction de la butée (11) quand la surface latérale (12B) de l'élément rotatif vient en butée contre le manchon intérieur.

6. Instrument de mesure selon l'une quelconque des revendications précédentes, comprenant en outre un moyen (7) de contrôle d'intervalle pour maintenir constant un intervalle entre l'échelle principale (31) et l'échelle d'index (29).

7. Instrument de mesure selon la revendication 6, dans lequel le moyen de contrôle d'intervalle comprend des protubérances (37) situées sur au moins l'une de l'échelle principale et de l'échelle d'index ; et un moyen de poussée (33), qui est situé sur l'armature principale en forme de U, et qui est disposé de façon à exercer une force de poussée poussant les échelles principale et d'index l'une vers l'autre.

8. Instrument de mesure selon la revendication 7, dans lequel trois des saillies (37) sont réalisées, le centre de poussée du moyen de poussée étant positionné au centre de gravité d'un triangle imaginaire ayant ces trois protubérances comme sommets.

9. Instrument de mesure selon l'une quelconque des revendications précédentes, dans lequel un tambour (17) est ajusté sur la périphérique extérieure du manchon extérieur (16), de façon à être circonférentiellement rotatif ; et un moyen de pression constante (25) disposé entre la périphérie intérieure du tambour et la périphérie extérieure du manchon extérieur, et disposé de façon à amener le tambour à se déplacer rapidement par rapport au manchon extérieur quand un couple non inférieur à un certain niveau est appliqué au tambour, et que la broche est en contact avec une pièce de travail, et résiste à un mouvement axial supplémentaire.

10. Instrument de mesure selon la revendication 9, dans lequel le moyen de pression constante comprend un ressort hélicoïdal (119) disposé entre la périphérie extérieure du manchon extérieur (16) et la périphérie intérieure du tambour (17), et dans lequel une surface extérieure cylindrique du ressort hélicoïdal s'appuie en friction contre la surface intérieure du tambour, une extrémité du ressort hélicoïdal étant fixée au manchon extérieur.

11. Instrument de mesure selon la revendication 10, dans lequel le moyen de pression constante comprend également des ressorts à lame (118) disposés entre la périphérie extérieure du manchon extérieur (16) et la périphérie intérieure du tambour (17), une extrémité de chacun des ressorts à lame étant fixée au manchon extérieur, avec l'autre extrémité de chaque ressort à lame venant en butée en friction contre une roue à rochet (17B) réalisée dans la périphérie intérieure du tambour.

12. Instrument de mesure selon la revendication 9, dans lequel le moyen de pression constante comprend au moins un ressort à lame (18) dont une extrémité est fixée à la périphérie extérieure du manchon extérieur (16) et dont l'autre extrémité vient en butée contre une roue à rochet (17A) réalisée dans la section de périphérie intérieure du tambour, et dans lequel une section de découpe respective (16B) est réalisée dans la périphérie extérieure du manchon extérieur, un bord (16C) de la section de découpe servant de point d'appui de flexion, contre lequel une partie centrale du ressort à lame vient en butée quand le tambour se déplace rapidement par rapport au manchon extérieur, pour permettre au ressort à lame de fléchir.

13. Instrument de mesure selon l'une quelconque des revendications précédentes, comprenant en outre un élément de capot (27) qui ferme une extrémité ouverte du manchon intérieur (15), et auquel est fixé un élément poreux qui permet la transmission de gaz, mais pas de liquide et de solide, entre l'intérieur du manchon intérieur et l'atmosphère.
